# EUROPÄISCHE PATENTSCHRIFT

(11) **EP 0 579 194 B1**
(45) Veröffentlichungstag und Bekanntmachung des Hinweises auf die Patenterteilung: **01.10.1997**
(21) Anmeldenummer: 93111251.0
(22) Anmeldetag: 14.07.1993
(51) Int. Cl.: F16L 37/092

(54) **Steckarmatur zum schnellen und lösbaren Anschluss von Rohrleitungen**
Socketless fitting for a quick and releasable connection of conduits
Raccord embrochable pour un assemblage rapide et détachable des conduites

(30) Priorität: 16.07.1992 DE 4223472
(43) Veröffentlichungstag der Anmeldung: 19.01.1994
(73) Patentinhaber: ARMATURENFABRIK HERMANN VOSS GMBH & CO., D-51688 Wipperfürth (DE)
(72) Erfinder: Goller, Bernd, D-51688 Wipperfürth (DE)
(74) Vertreter: Patentanwälte Dr. Solf & Zapf

(56) Entgegenhaltungen:
- EP-A- 0 003 746
- EP-A- 0 378 035
- EP-A- 0 379 655
- DE-A- 4 002 057
- DE-U- 8 660 033
- GB-A- 2 072 780

## Beschreibung

Die vorliegende Erfindung betrifft eine Steckarmatur zum schnellen und lösbaren Anschluß für Rohrleitungen, insbesondere aus Kunststoff, bestehend aus einem Anschlußgehäuse zur Aufnahme eines Endes der Rohrleitung und einem innerhalb des Gehäuseinnenraumes angeordneten Halteelement mit mindestens einer sich in das Leitungsende einschneidenden Schneidkante und mit einem Außenkonusabschnitt, der mit einem Konusabschnitt des Gehäuses bei Bewegung der Rohrleitung entgegengesetzt zur Einsteckrichtung zur Halterung der Rohrleitung zusammenwirkt, sowie mit einer Umfangsdichtung zur Abdichtung der Rohrleitung gegen das Anschlußgehäuse, wobei das Halteelement in und gegen die Einsteckrichtung der Rohrleitung im Gehäuseinnenraum längsverschiebbar angeordnet ist und mit einem Betätigungsabschnitt aus dem Anschlußgehäuse herausragt sowie einen Gegenkonusabschnitt aufweist, der zum radialen Spreizen der Schneidkante mit einer konischen Schulter im entgegengesetzten Sinne zur Wirkrichtung des Konusabschnittes des Gehäuses bei Verschiebung des Halteelementes in Einsteckrichtung zusammenwirkt.

Eine ähnliche Steckarmatur ist aus dem Deutschen Patent DE-C-31 31 690 bekannt. Hierbei ist das Anschlußgehäuse aus zwei Verschraubungsteilen gebildet und die Lösbarkeit der Rohrleitung aus dem Gehäuse ergibt sich dadurch, daß die beiden Gehäuseteile auseinandergeschraubt werden können. Eine derartige Steckarmatur hat sich zwar bewährt, jedoch hat sich herausgestellt, daß insbesondere bei der Durchführung von Reparaturen die Gefahr besteht, daß nach dem Lösen der Rohrleitung die Gefahr des Verlustes des Halteelementes besteht. Das Halteelement ist in dieser Steckarmatur nicht gegen die Einsteckrichtung der Rohrleitung im Gehäuseinnenraum längsverschiebbar angeordnet, ragt nicht mit einem Betätigungsabschnitt aus dem Anschlußgehäuse heraus und weist keinen Gegenkonusabschnitt auf.

Eine bekannte Steckarmatur der eingangs beschriebenen Art ist in der EP-A 0 003 746 beschrieben. Das Halteelement, eine Spannzange, ist dort in dem aus zwei miteinander verrasteten Teilen, einem Stutzenteil und einem Gehäuseteil, bestehenden Anschlußgehäuse aufgenommen. Die Arretierung des Gehäuseteiles auf dem Stutzenteil durch einen Schnappverschluß ist konstruktiv und fertigungstechnisch relativ aufwendig, weil die beiden Teile genau zu einander passende Rastelemente, wie eine Ringnut und einen komplementär ausgebildeten Innenrand, aufweisen müssen, um eine für die Funktion wichtige, feste, spielfreie Verbindung zu erreichen.

Einen ganz ähnlichen Stand der Technik offenbart das Dokument DE-U-86 60 033 der Anmelderin, wobei insbesondere bei der beschriebenen Steckarmatur zwei Gehäuseteile über eine Schnappverbindung miteinander verbunden sind.

Schließlich ist bei einer gattungsgemäßen Steckarmatur, welche aus der ebenfalls auf die Anmelderin zurückgehenden DE-A-4 002 057 bekannt ist, in ein erstes Gehäuseteil ein zweites Gehäuseteil eingepreßt. Auch diese Verbindungsart erfordert eine relativ aufwendige, genau aneinander angepaßte Fertigung der Gehäuseteile, um die erforderliche starre Verbindung zu erreichen.

Des weiteren sind auch Steckarmaturen anderer Art bekannt, welche als Biege-Stanzteile ausgebildete Halteelemente aufweisen, so beispielsweise eine Armatur entsprechend der EP-A-0 379 655, bei der kein Konuskörper sondern ein als Schiebeteil ausgebildetes Löseelement vorgesehen ist.

Ausgehend von diesem Stand der Technik liegt der vorliegenden Erfindung die Aufgabe zugrunde, eine Steckarmatur zu schaffen, die unter Beibehaltung guter Funktionseigenschaften einfacher und preiswerter hergestellt werden kann.

Erfindungsgemäß wird dies dadurch erreicht, daß das Halteelement als Biege-Stanzteil mit einem Halteabschnitt ausgebildet ist, der aus mehreren, axial verlaufenden federelastischen Armen besteht, die gegeneinander durch Schlitze getrennt sind und Endstücke mit freigestanzten Schneidzähnen aufweisen, wobei die den Gegenkonusabschnitt bildenden Endstücke mit der konischen Schulter zum radialen Spreizen der Schneidzähne zusammenwirken, und wobei die federelastischen Arme über den Außenkonusabschnitt bildende Armabschnitte mit dem Konusabschnitt zusammenwirken, um die Schneidzähne radial nach innen gegen die Rohrleitung zu drücken.

Bei dieser erfindungsgemäßen Ausbildung ist es möglich, über den Betätigungsabschnitt das Halteelement bei Verschiebung in Einsteckrichtung zu spreizen, so daß einerseits ein beschädigungsfreies Einschieben der Rohrleitung möglich ist und andererseits auch ein Herausziehen der Rohrleitung, ohne daß eine Demontage des Anschlußgehäuses erfolgen muß. Darüber hinaus wirkt das erfindungsgemäße Halteelement bei Verschiebung entgegen der Einsteckrichtung derart, daß sich die Schneidkante in die Rohrleitung eingräbt. Die Armatur ist vergleichsweise einfach herstellbar.

Weitere vorteilhafte Ausführungsformen der Erfindung sind in den Unteransprüchen enthalten.

Anhand der in den beiliegenden Zeichnungen dargestellten Ausführungsbeispiele wird die Erfindung näher erläutert. Es zeigen:
- Fig. 1: einen Schnitt durch eine der Erfindung nahekommende Steckarmatur in zwei unterschiedlichen Einschubstellungen der anzuschließenden Rohrleitung, wobei das Halteelement jedoch nicht erfindungsgemäß ausgebildet ist.
- Fig. 2: eine Ansicht eines Spannelementes gemäß Fig. 1, zum Teil geschnitten,
- Fig. 3: eine Frontalansicht auf das Spannelement gemäß Fig. 2,
- Fig. 4 und 5: Teilschnitte durch zwei alternative Ausführungsformen einer erfindungsgemäßen Steckarmatur,
- Fig. 6: eine Seitenansicht durch ein weiteres erfindungsgemäßes Spannelement gemäß Fig. 4, zum Teil geschnitten,
- Fig. 7: eine Teilansicht eines erfindungsgemäßen Spannelementes gemäß Fig. 6,
- Fig. 8: eine Frontalansicht auf ein erfindungsgemäßes Spannelement gemäß Fig. 6.

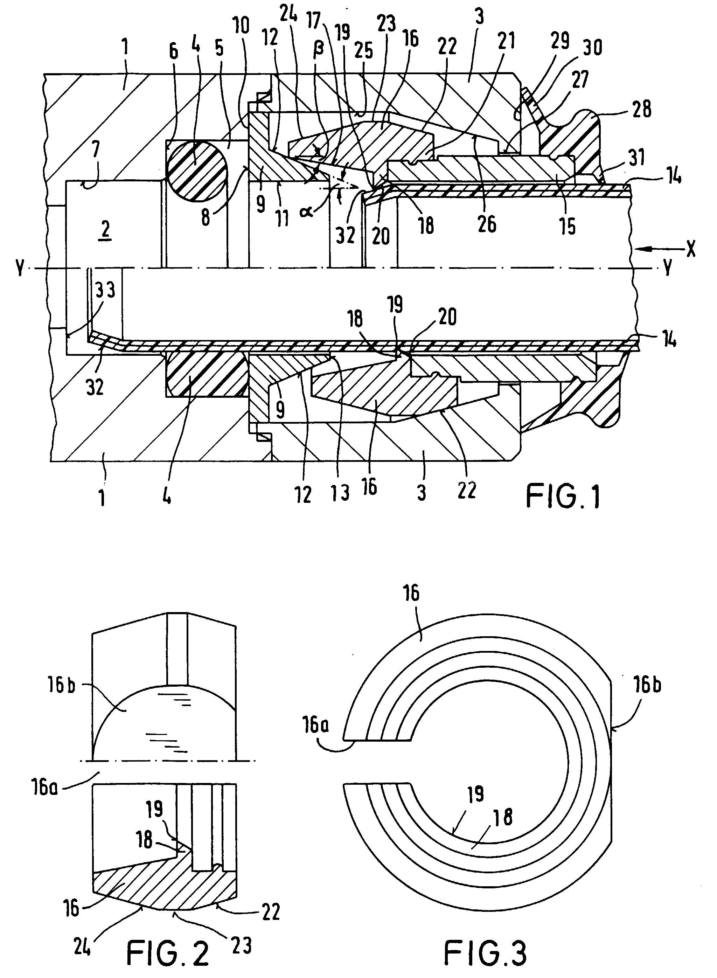

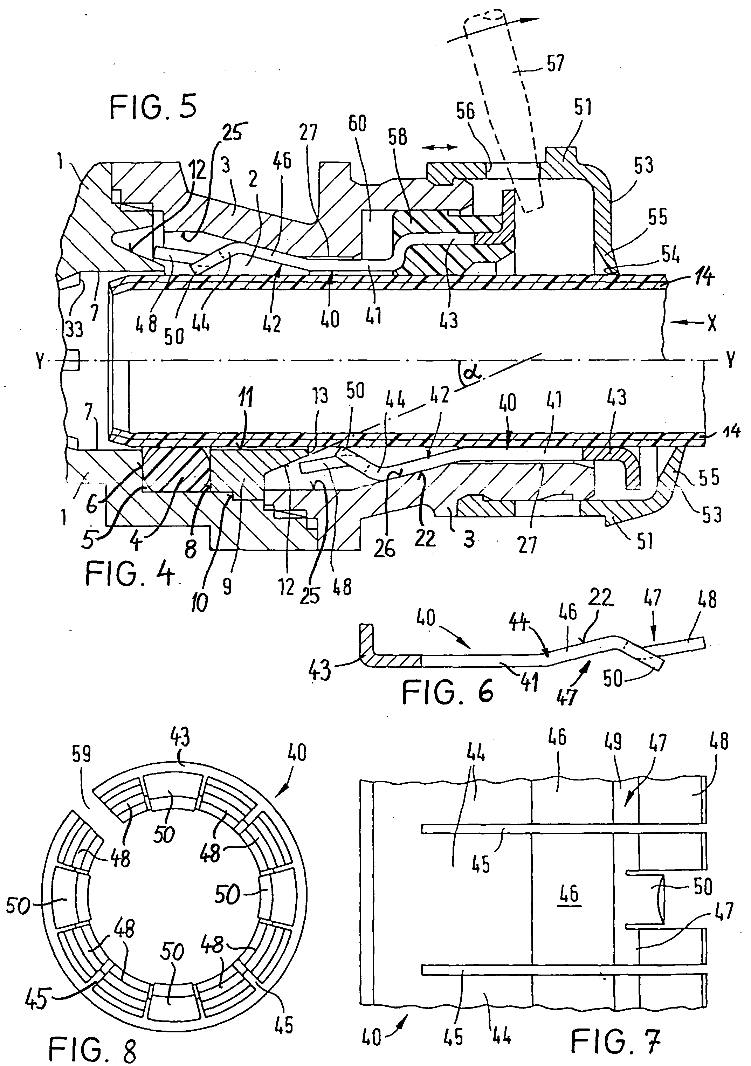

Die in den Fig. 1 bis 3 dargestellte Steckarmatur dient zum schnellen und lösbaren Anschluß von beispielsweise Kunststoff-Rohr- oder Schlauchleitungen. Diese Armatur weist eine Vielzahl mit der Erfindung übereinstimmende Merkmale auf und weicht in ihrer Funktionsweise beim Einstecken und Lösen einer Rohrleitung, sowie in ihrer Montage nur hinsichtlich der anhand der Fig. 4 bis 8 beschriebenen Merkmale ab. Die Steckarmatur besteht aus einem Anschlußgehäuse zur Aufnahme des Leitungsendes. Dieses Anschlußgehäuse besteht aus einem ersten Gehäuseteil 1 mit beispielsweise einem nicht dargestellten, an einem Ende angeformten Gewindeanschlußstutzen und einer Durchgangsöffnung 2 und einem zweiten, hohlzylindrischen Gehäuseteil 3, das einendig mit dem ersten Gehäuseteil 1 koaxial gleichgerichtet fest verbunden ist. Diese Verbindung kann z.B. durch Verkleben oder Verschweißen an den jeweils einander gegenüberliegenden Stirnseiten des ersten Gehäuseteils 1 und des zweiten Gehäuseteils 3 erfolgen.

Der von dem ersten Gehäuseteil 1 und dem zweiten Gehäuseteil 3 eingeschlossene Innenraum beinhaltet mehrere Öffnungsstufen zur Anlage verschiedener Bauteile. In Einsteckrichtung, siehe Pfeil X, gesehen ist zunächst eine Umfangsdichtung 4 vorgesehen, die als O-Dichtring ausgebildet ist und innerhalb einer inneren Umfangsnut 5 mit axialem Spiel angeordnet ist. Diese Umfangsnut 5 wird von einer Ringstufe 6 einer Durchgangsbohrung 7 des ersten Gehäuseteils 1 und einer Stirnfläche 8 eines ringförmigen Konuskörpers 9 gebildet. Hierbei liegt der Konuskörper 9 mit seiner Stirnfläche 8 im Bereich eines äußeren Flächenabschnitts an einer weiteren Ringstufe 10 an. Der Konuskörper 9 besitzt eine Bohrung 11 mit einem Durchmesser entsprechend der Durchgangsbohrung 7. Der Konuskörper 9 weist an seinem der Stirnfläche 8 abgekehrten Ende eine konisch verlaufende Schulter 12 auf, deren Außendurchmesser entgegen der Einsteckrichtung X kontinuierlich abnimmt, so daß ihre Umfangsfläche 13 unter einem spitzen Winkel α zur Armatur-Längsachse Y-Y verläuft. Innerhalb des Anschlußgehäuses im Bereich des zweiten Gehäuseteils 3 ist eine Verschiebehülse 15 in und gegen die Einsteckrichtung X verschiebbar geführt, deren Innendurchmesser dem Durchmesser der Durchgangsbohrung 7 entspricht. Der Durchmesser der Durchgangsbohrung 7 entspricht seinerseits dem Außendurchmesser einer in das Anschlußgehäuse einzusteckenden Schlauch- oder Rohrleitung 14, insbesondere aus Kunststoff.

Auf ihrem innerhalb des zweiten Gehäuseteils 3 liegenden Ende trägt die Verschiebehülse 15 einen Haltekörper 16, der als Zahnring ausgebildet ist. Dieser Zahnring 16 besitzt eine Durchgangsbohrung mit einem dem Konuskörper 9 zugewandten Gegenkonusabschnitt 17, dessen Innendurchmesser in Richtung auf das Innere des Zahnrings 16 entgegen der Einsteckrichtung X, ausgehend von einem vorderen Öffnungsdurchmesser, der größer/gleich ist als der mittlere Außendurchmesser des Konusabschnittes 12, auf einem Durchmesser, der etwa dem kleinsten Durchmesser des Konusabschnittes 12 entspricht, abnimmt.

Am inneren Ende des Gegenkonusabschnittes 17 ist im dargestellten Beispiel ein radial nach innen ragender Zahn 18 ausgebildet, mit einer Zahnspitze 19 und einer schräg nach außen verlaufenden Zahnfläche 20. Der Innendurchmesser des Zahnrings 16 im Bereich der Spitze 19 ist kleiner als der Außendurchmesser der Rohrleitung 14. Der Neigungswinkel β des Gegenkonus 17 ist kleiner als der Winkel α. An den Zahn 18 schließt sich ein zylindrischer Abschnitt 21 an, mit dem der Zahnring 16 auf der Schiebehülse 15 form- und kraftschlüssig insbesondere durch eine Rastverbindung befestigt ist. Der Zahnring 16 weist einen Längsschlitz 16a auf, wodurch sich eine radiale Spreizbarkeit des Zahnringes 16 ergibt. Des weiteren besitzt der Zahnring 16 dem Längsschlitz 16a gegenüber eine Abflachung 16b. Am äußeren Umfang des Zahnrings 16 besitzt dieser dem zylindrischen Abschnitt 21 gegenüber einen Außenkonusabschnitt 22, dessen Außendurchmesser von dem der Verschiebehülse 15 nahen Ende des Zahnrings 16 kontinuierlich größer wird. An diesen Außenkonusabschnitt 22 schließt sich ein zylindrischer Abschnitt 23 an, der in einen Abschnitt 24 mit stetig kleiner werdenden Außendurchmesser übergeht.

Der von dem zweiten Gehäuseteil 3 umschlossene Innenraum weist im Anschluß an den Konuskörper 9 einen zylindrischen Abschnitt 25 auf, dessen Durchmesser dem Durchmesser der Stirnfläche 8 des Konuskörpers 9 bzw. der Ringstufe 10 entspricht und den Zahnring 16 mit radialem Spiel umschließt. Entgegen der Einsteckrichtung X schließt sich an den Abschnitt 25 ein Konusabschnitt 26 an, dessen Neigung der des Außenkonusabschnittes 22 entspricht, wobei der kleinste Durchmesser am Ende des Konusabschnittes 26 kleiner ist als der Außendurchmesser des Außenkonusabschnittes 22 an dessen korrespondierendem Ende. Am Ende des Konusabschnittes 26 ist im Öffnungsbereich des zweiten Gehäuseteils 3 ein Ringabschnitt 27 ausgebildet, der zur Führung des Verschiebehülse 15 dient und dessen Öffnungsdurchmesser dem Außendurchmesser der Verschiebehülse 15 vergrößert um ein geringes radiales Spiel entspricht.

Auf dem aus dem zweiten Gehäuseteil 3 herausragenden Ende der Verschiebehülse 15 ist ein aus elastischem Material bestehender Profilring 28 befestigt. Dieser Profilring 28 weist eine in Richtung auf die Stirnfläche 29 des zweiten Gehäuseteils 3 verlaufende und an dieser in jeder Stellung der Verschiebehülse anliegende Dichtlippe 30 auf, mit der der Spalt zwischen der Verschiebehülse 15 und dem Ringsteg 27 abgedichtet wird.

Weiterhin weist der Profilring 28 eine weitere in entgegengesetzter Richtung zu der Richtung der Dichtlippe 30 ausgerichtete, schräg zur Längsachse Y-Y verlaufende Dichtlippe 31 auf, die gegen die eingesteckte Rohrleitung 14 umfangsgemäß anliegt und den Spalt zwischen der Rohrleitung 14 und der Verschiebehülse 15 abdichtet.

Weiterhin ist zu erkennen, daß die Rohrleitung 14 an ihrem Öffnungsrand eine umlaufende, äußere Konizität 32 im Sinne einer Durchmesserverringerung aufweist, wodurch das Einstecken bis zu einer inneren, als Anschlag dienenden Ringstufenfläche 33 der Durchgangsbohrung 7 im ersten Gehäuseteil 1 erleichtert wird.

Die Montage dieser Steckarmatur erfolgt derart, daß in das erste Gehäuseteil 1 die Umfangsdichtung 4 sowie der Konuskörper 9 vormontiert werden, und in das zweite Gehäuseteil 3 wird die Verschiebehülse mit dem aufgesetzten Haltekörper vormontiert. Danach werden das erste und das zweite Gehäuseteil 1, 3 an ihren Stirnflächen miteinander materialschlüssig verbunden.

Die Funktion der beschriebenen Steckarmatur ist wie folgt. In das von dem ersten und zweiten Gehäuseteil 1, 3 gebildete Anschlußgehäuse wird die Rohrleitung 14 eingeschoben. Hierbei wird die Verschiebehülse mit dem Haltekörper 16 in Einsteckrichtung verschoben, so daß der Haltekörper 16 mit seinem Gegenkonusabschnitt 17 auf der Schulter 12 aufgleitet und dabei der Haltekörper 16 radial gespreizt wird, so daß die Rohrleitung 14 an der Zahnspitze 19 des Zahns 18 vorbei in das Anschlußgehäuse hineingeschoben werden kann, und zwar bis zum Anschlag 33.

Nach erfolgter Rohrmontage wird die Schiebehülse entgegen der Einsteckrichtung X verschoben, wobei dann der Außenkonusabschnitt 22 des Haltekörpers 16 gegen den Konusabschnitt 26 des zweiten Gehäuseteils 3 zur Anlage kommt, wodurch der Haltering 16 radial zusammengedrückt wird, so daß sich die Zahnspitze 19 des Zahns 18 in das Material der Rohrleitung eingräbt. Durch Druckbeaufschlagung und Zug an der Rohrleitung wird dabei die Klemmkraft des Halterings noch vergrößert, so daß eine sichere Halterung des Rohres gewährleistet ist.

Die Anordnung der Umfangsdichtung 4 innerhalb des Anschlußgehäuses ist derart, daß in allen möglichen Verschiebestellungen der Rohrleitung stets eine umfangsgemäße Abdichtung gegeben ist.

Zur Lösung der Rohrleitung 14 aus der beschriebenen Steckarmatur wird die Verschiebehülse in Einsteckrichtung in das Anschlußgehäuse eingeschoben, wodurch wiederum, wie vorstehend beschrieben, eine Spreizung des Haltekörpers 16 erfolgt, so daß der Zahn 18 außer Eingriff mit der Rohrleitung kommt und diese herausgezogen werden kann.

In den Fig. 4 bis 8 sind zwei Ausführungsformen der erfindungsgemäßen Steckarmatur gezeigt, wobei gleiche Teile wie in den Fig. 1 bis 3 mit denselben Bezugsziffern versehen sind. Die Funktion des Haltekörpers 16 und der Schiebehülse 15 gemäß den Fig. 1 und 3 übernimmt gemäß der Erfindung (Fig. 5 bis 7) aber ein als Stanz- und Biegeteil ausgebildetes Halteelement 40. Dieses Halteelement 40 besitzt einen mittleren, zylindrischen Hülsenabschnitt 41, der einen in der Durchgangsöffnung 2 liegenden Halteabschnitt 42 des Halteelements 40 mit einem außerhalb des zweiten Gehäuseteils 3 liegenden Betätigungsabschnitt 43 verbindet. Der Halteabschnitt 42 besteht aus mehreren am Umfang des Hülsenabschnitts 41 angeordneten, axial verlaufenden federelastischen Armen 44, die gegeneinander durch Schlitze 45 getrennt sind. Die Arme 44 besitzen einen radial schräg nach außen verlaufenden, ersten Armabschnitt 46 und einen sich daran anschließenden, zweifach abgebogenen zweiten Abschnitt 47. Der zweite Abschnitt 47 besteht aus einem schräg zur Längsachse Y-Y, d.h. zum Umfang der Rohrleitung 14 verlaufenden Endstück 48 und einem etwa entgegengesetzt geneigt hierzu verlaufenden Zwischenstück 49. Am Übergang zwischen dem Endstück 48 und dem Zwischenstück 49 ist ein Innendurchmesser vorhanden, der etwa dem Außendurchmesser der Rohrleitung 14 entspricht. Der Neigungswinkel des ersten Armabschnitts 46 ist dem Konuswinkel des Außenkonusabschnitts 26 angepaßt und der Neigungswinkel des Endstückes 48 ist etwas kleiner als der Winkel α der Schulter 12. Weiterhin weist das Endstück 48 frei gestanzte Schneidzähne 50 auf, die in Verlängerung des Zwischenstücks 49 radial innen vorstehen, so daß der Innendurchmesser des Halteelementes 40 im Endbereich der Schneidzähne 50 etwas kleiner ist als der Außendurchmesser der Rohrleitung 14.

Der Betätigungsabschnitt 43 besteht aus einem radial nach außen, senkrecht zur Längsachse Y-Y abgebogenen Ringsteg und befindet sich innerhalb einer durch eine hohlzylindrische Dichtkappe 51 gebildeten Kammer. Hierzu ist die Dichtkappe 51 mit ihrem offenen Ende auf das freie Ende des zweiten Gehäuseteils 3 aufgeschoben und mit diesem durch einen Schnappverschluß form- und kraftschlüssig verbunden. Die Stirnwandung 53 der Dichtkappe 51 ist im Bereich ihrer Durchtrittsöffnung 54 für die Rohrleitung 14 als Dichtlippe 55 ausgebildet, wodurch der Ringspalt zwischen der Rohrleitung 14 und der Stirnwandung 53 abgedichtet wird. In ihrer Umfangswandung besitzt die Dichtkappe 51 einen Durchbruch 56 zum Durchstecken eines Betätigungswerkzeuges 57.

Für eine sichere Führung des Hülsenabschnitts 41 ist der Ringabschnitt 27 des zweiten Gehäuseteils 3 relativ lang ausgebildet.

In Fig. 5 ist eine alternative Ausführungsform zu Fig. 4 gezeigt, wobei in Abänderung innerhalb des ersten Gehäuseteils 1 keine O-Ringdichtung angeordnet ist. An deren Stelle ist zur umfangsgemäßen Abdichtung der Rohrleitung 14 im Bereich des Innenraums in dem zweiten Gehäuseteil 3 eine Aufnahmekammer 60 ausgebildet, in der ein Profildichtring 58 aufgenommen wird, der an dem Betätigungsabschnitt 43 des Halteelements 40 befestigt ist. Hierzu ist zweckmäßigerweise der Betätigungsabschnitt 43 in dem Profildichtring 58 eingebettet. Die Aufnahmekammer 60 ist ringförmig ausgebildet und besitzt eine derartige axiale Abmessung, daß der Profildichtring 58 hierin längsverschiebbar geführt ist. Weiterhin ist im Unterschied zu der Ausführungsform gemäß Fig. 4 der Konuskörper 9 einstückig mit dem ersten Gehäuseteil 1 ausgebildet.

Wie aus Fig. 6 bis 8 ersichtlich ist, ist das Halteelement 40 durch einen Längsschlitz 59 längsgeteilt, wodurch sich eine radiale Elastizität ergibt. Die Montage der erfindungsgemäßen Steckarmatur erfolgt derart, daß in die stirnseitig miteinander verschweißten Gehäuseteile 1, 3 das Halteelement 40 eingeschoben wird. Dies ist deshalb möglich, da das Halteelement längsgeschlitzt ist und zum Einschieben derart zusammengedrückt werden kann, daß es durch die Öffnung im Bereich des Ringabschnittes 27 hindurch in den Innenraum des Anschlußgehäuses mit seinem Halteabschnitt 42 eingeschoben werden kann.

Die Funktion der Armatur gemäß den Fig. 4 bis 5 ist wie folgt. Zum Einstecken der Rohrleitung 14 wird diese mit ihrem Ende eingesteckt, wobei das Halteelement 40 in Einsteckrichtung gleichzeitig mit verschoben wird. Hierbei gleiten die Arme 44 mit ihren Endstücken 48 auf der Schulter 12 des Konuskörpers 9 auf, wodurch ein radiales Auseinanderspreizen des Halteabschnittes 42 erreicht wird, so daß die Rohrleitung 14 an den Schneidzähnen 50 vorbei eingeschoben werden kann. Durch Zurückziehen des Halteelementes 40 kommt der Halteabschnitt 42 mit seinem ersten Armabschnitt 46 zur Anlage an den Konusabschnitt 26 des zweiten Gehäuseteils 3, so daß der Halteabschnitt 42 radial nach innen gedrückt wird, wodurch sich die Schneidzähne 50 in die Wandung der Rohrleitung 14 eingraben. Durch Zug an der Rohrleitung oder Beaufschlagung durch Innendruck versucht das Rohr unter Mitnahme des Halteelementes 40 sich aus der Steckarmatur herauszubewegen. Durch die hierbei auftretende gegenseitige Anlage des Halteabschnitts 42 an dem Konusabschnitt 26 wird die Haltekraft des Halterings derart gesteigert, daß die Rohrleitung sicher gehalten wird.

Die Abdichtung der Rohrleitung gegenüber der Steckarmatur erfolgt in der Ausführungsform gemäß Fig. 4 bei Austritt eines in der Rohrleitung befindlichen Druckmediums mittels der Umfangsdichtung 4 und in der Ausführungsform gemäß Fig. 5 durch den Profildichtring 58.

Zum Lösen der Rohrleitung 14 aus der Steckarmatur wird mittels eines durch den Durchbruch 56 einsteckbaren Werkzeuges über den Betätigungsabschnitt 43 das Halteelement 40 in Richtung der Einsteckrichtung X verschoben, so daß der Halteabschnitt 42 radial gespreizt wird und die Schneidzähne 50 außer Eingriff mit der Rohrleitung 14 gebracht werden, so daß die Rohrleitung herausgezogen werden kann.

## Patentansprüche

1. Steckarmatur zum schnellen und lösbaren Anschluß für Rohrleitungen (14) insbesondere aus Kunststoff, bestehend aus einem Anschlußgehäuse (1,3) zur Aufnahme eines Endes der Rohrleitung (14) und einem innerhalb des Gehäuseinnenraumes angeordneten Halteelement (40) mit mindestens einer sich in das Leitungsende einschneidenden Schneidkante und mit einem Außenkonusabschnitt (22), der mit einem Konusabschnitt (26) des Gehäuses (1,3) bei Bewegung der Rohrleitung (14) entgegengesetzt zur Einsteckrichtung (X) zur Halterung der Rohrleitung (14) zusammenwirkt, sowie mit einer Umfangsdichtung (4; 58) zur Abdichtung der Rohrleitung (14) gegen das Anschlußgehäuse (1,3), wobei das Halteelement (40) in und gegen die Einsteckrichtung (X) der Rohrleitung (14) im Gehäuseinnenraum längsverschiebbar angeordnet ist und mit einem Betätigungsabschnitt (43) aus dem Anschlußgehäuse (1,3) herausragt sowie einen Gegenkonusabschnitt aufweist, der zum radialen Spreizen der Schneidkante mit einer konischen Schulter (12) im entgegengesetzten Sinne zur Wirkrichtung des Konusabschnittes (26) des Gehäuses (1,3) bei Verschiebung des Halteelementes (40) in Einsteckrichtung zusammenwirkt,
**dadurch gekennzeichnet**, daß das Halteelement (40) als Biege-Stanzteil mit einem Halteabschnitt (42) ausgebildet ist, der aus mehreren, axial verlaufenden federelastischen Armen (44) besteht, die gegeneinander durch Schlitze (45) getrennt sind und Endstücke (48) mit freigestanzten Schneidzähnen (50) aufweisen, wobei die den Gegenkonusabschnitt bildenden Endstücke (48) mit der konischen Schulter (10) zum radialen Spreizen der Schneidzähne (50) zusammenwirken, und wobei die federelastischen Arme (44) über den Außenkonusabschnitt (22) bildende Armabschnitte (46) mit dem Konusabschnitt (26) zusammenwirken, um die Schneidzähne (50) radial nach innen gegen die Rohrleitung (14) zu drücken.

2. Steckarmatur nach Anspruch 1,
**dadurch gekennzeichnet**, daß das Anschlußgehäuse (1, 3) aus einem ersten Gehäuseteil (1) und einem zweiten, hohlylindrischen, zu diesem koaxial angeordneten zweiten Gehäuseteil (3) besteht, und die Gehäuseteile (1, 3) an ihren zueinandergekehrten Stirnseiten materialschlüssig, insbesondere durch Verschweißen oder Verkleben miteinander verbunden sind.

3. Steckarmatur nach Anspruch 1 oder 2,
**dadurch gekennzeichnet**, daß im ersten Gehäuseteil (1) eine Durchgangsöffnung (2) mit einer Durchgangsbohrung (7) ausgebildet ist, wobei in Einsteckrichtung (X) gesehen zuerst eine Umfangsdichtung (4), insbesondere ein O-Dichtungsring, innerhalb einer inneren Umfangsnut (5) angeordnet ist.

4. Steckarmatur nach einem der Ansprüche 1 bis 3,
**dadurch gekennzeichnet**, daß innerhalb des ersten Gehäuseteils (1) ein ringförmiger Konuskörper (9) ausgebildet ist, der eine Bohrung (11) mit einem Durchmesser entsprechend der Durchgangsbohrung (7) sowie an seiner dem zweiten Gehäuseteil (3) zugekehrten Seite eine konisch verlaufende Schulter (12) aufweist, deren Außendurchmesser entgegen der Einsteckrichtung (X) kontinuierlich abnimmt, so daß ihre Umfangsfläche (13) unter einem spitzen Winkel (α) zur Armatur-Längsachse (Y-Y) verläuft.

5. Steckarmatur nach einem der Ansprüche 1 bis 4,
**dadurch gekennzeichnet**, daß der Konuskörper (9) als separater Ring ausgebildet ist, der mit seiner dem ersten Gehäuseteil (1) zugekehrten Seite im Bereich eines äußeren Flächenabschnittes an einer Ringstufe (10) der Durchgangsbohrung (7) des ersten Gehäuseteils (1) anliegt.

6. Steckarmatur nach einem der Ansprüche 1 bis 4,
**dadurch gekennzeichnet**, daß der Konuskörper (9) einstückig mit dem ersten Gehäuseteil (1) ausgebildet ist.

7. Steckarmatur nach einem der Ansprüche 1 bis 5,
**dadurch gekennzeichnet**, daß die dem ersten Gehäuseteil (1) zugekehrte Seite des Konuskörpers (9) eine Wandung der inneren Umfangsnut (5) zur Aufnahme des Dichtungsringes (4) bildet.

8. Steckarmatur nach einem der Ansprüche 2 bis 6,
**dadurch gekennzeichnet**, daß das Halteelement (40) einen innerhalb des zweiten Gehäuseteils (3) geführten Hülsenabschnitt (41) aufweist.

9. Steckarmatur nach einem der Ansprüche 1 bis 8,
**dadurch gekennzeichnet**, daß die Armabschnitte (46) der federelastischen Arme (44) des Halteabschnittes (42) einen radial schräg nach außen gerichteten Verlauf aufweisen und die Arme (44) jeweils einen sich an die Armabschnitte (46) anschließenden zweifach abgebogenen Abschnitt (47) besitzen, wobei der zweite Abschnitt (47) aus einem schräg zur Längsachse (Y-Y) verlaufenden Endstück (48) und einem etwa entgegengesetzt zu diesem geneigt verlaufenden Zwischenstück (49) besteht und der Neigungswinkel des ersten Armabschnitts (46) mit dem Konuswinkel des Außenkonus (26) zusammenwirkt und der Neigungswinkel des Endstückes (48) etwas kleiner ist als der Winkel (α) der Schulter (12).

10. Steckarmatur nach Anspruch 9,
**dadurch gekennzeichnet**, daß die frei gestanzten Schneidzähne (50) der Endstücke (48) in Verlängerung des Zwischenstücks (49) radial nach innen vorstehen, so daß der Innendurchmesser des Halteelementes (40) im Endbereich der Schneidzähne (50) etwas kleiner ist als der Außendurchmesser der Rohrleitung (14).

11. Steckarmatur nach einem der Ansprüche 1 bis 10,
**dadurch gekennzeichnet**, daß das Halteelement (40) durch einen Längsschlitz (59) längsgeteilt ist.

12. Steckarmatur nach einem der Ansprüche 1 bis 11,
**dadurch gekennzeichnet**, daß der Betätigungsabschnitt (43) aus einem radial nach außen senkrecht zur Längsachse abgebogenen Ringabschnitt besteht.

13. Steckarmatur nach einem der Ansprüche 2 bis 12,
**dadurch gekennzeichnet**, daß auf dem Ende des zweiten Gehäuseteils (3) eine hohlzylindrische Dichtkappe (51), insbesondere durch eine Rastverbindung, befestigt ist, die eine den Betätigungsabschnitt (43) aufweisende Kammer einschließt und eine Dichtlippe (55) aufweist zur Abdichtung gegenüber der Rohrleitung (14).

14. Steckarmatur nach Anspruch 13,
**dadurch gekennzeichnet**, daß in der Dichtkappe (51) ein Durchbruch (56) zum Durchstekken eines Betätigungswerkzeuges ausgebildet ist.

15. Steckarmatur nach Anspruch 13 oder 14,
**dadurch gekennzeichnet**, daß außerhalb des Gehäuseinnenraums im von der Dichtkappe (51) umfaßten Endbereich des zweiten Gehäuseteils (3) eine ringförmige Aufnahmekammer (57) zur Aufnahme eines Profildichtringes (58) ausgebildet ist, der mit dem Betätigungsabschnitt (43) verbunden ist.

16. Steckarmatur nach Anspruch 15,
**dadurch gekennzeichnet**, daß der Betätigungsabschnitt (43) mit dem Profildichtring (58) durch Aufvulkanisation verbunden ist.

17. Steckarmatur nach Anspruch 15 oder 16,
**dadurch gekennzeichnet**, daß der Profildichtring (58) in der Aufnahmekammer (57) längsverschiebbar geführt ist.

## Claims

1. A push-in fitting for the rapid and releasable connection of conduits (14), in particular of plastics material, comprising a connection housing (1, 3) for receiving one end of the conduit (14) and a holding element (40) arranged within the housing interior and having at least one cutting edge, cutting into the conduit end, and an externally conical portion (22) which, for the purpose of holding the conduit (14), cooperates with a conical portion (26) of the housing (1, 3) when the conduit (14) moves in opposition to the direction of insertion (X), and having a peripheral seal (4; 58) for sealing the conduit (14) with respect to the connection housing (1, 3), the holding element (40) being arranged longitudinally displaceably in and in opposition to the direction of insertion (X) of the conduit (14) in the housing interior and projecting out of the connection housing (1, 3) by means of an actuating portion (43) and having a counter-conical portion which, in order to spread the cutting edge radially, cooperates with a conical shoulder (12) in the direction opposite to the operative direction of the conical portion (26) of the housing (1, 3) when the holding element (40) is displaced in the direction of insertion, characterized in that the holding element (40) is constructed as a punched bent part having a holding portion (42) which comprises a plurality of axially running resilient arms (44) which are separated from one another by slits (45) and have end pieces (48) with punched-out cutting teeth (50), in which arrangement the end pieces (48) forming the counter-conical portion cooperate with the conical shoulder (10) in order to spread the cutting teeth (50) radially, and the resilient arms (44) cooperate, via the arm portions (46) forming the externally conical portion (22), with the conical portion (26) in order to press the cutting teeth (50) radially inwards against the conduit (14).

2. A push-in fitting according to Claim 1, characterized in that the connection housing (1, 3) comprises a first housing part (1) and a second hollow cylindrical housing part (3) arranged coaxially therewith, and the housing parts (1, 3) are connected to one another with material fit at their mutually facing end faces, in particular by welding or adhesion.

3. A push-in fitting according to Claim 1 or 2, characterized in that a through opening (2) having a through bore (7) is made in the first housing part (1), a peripheral seal (4), in particular an O-shaped sealing ring, being arranged within an internal peripheral groove (5) first as seen in the direction of insertion (X).

4. A push-in fitting according to one of Claims 1 to 3, characterized in that an annular conical body (9) is constructed within the first housing part (1) and has a bore (11) having a diameter corresponding to the through bore (7) and, at its side facing the second housinq part (3), a conically running shoulder (12) whereof the external diameter decreases continuously in the direction opposite to the direction of insertion (X), so that its peripheral surface (13) runs at an acute angle (α) with respect to the longitudinal axis (Y-Y) of the fitting.

5. A push-in fitting according to one of Claims 1 to 4, characterized in that the conical body (9) is constructed as a separate ring which, by means of its side facing the first housing part (1), bears in the region of an outer surface portion against an annular step (10) of the through bore (7) of the first housing part (1).

6. A push-in fitting according to one of Claims 1 to 4, characterized in that the conical body (9) is constructed in one piece with the first housing part (1).

7. A push-in fitting according to one of Claims 1 to 5, characterized in that the side of the conical body (9) facing the first housing part (1) forms a wall of the internal peripheral groove (5) for receiving the sealing ring (4).

8. A push-in fitting according to one of Claims 2 to 6, characterized in that the holding element (40) has a sleeve portion (41) guided within the second housing part (3).

9. A push-in fitting according to one of Claims 1 to 8, characterized in that the arm portions (46) of the resilient arms (44) of the holding portion (42) have a course which is directed radially obliquely outwards, and the arms (44) each have a portion (47) which adjoins the arm portions (46) and is bent twice, the second portion (47) comprising an end piece (48) running obliquely with respect to the longitudinal axis (Y-Y) and an intermediate piece (49) running at an incline approximately in opposition thereto, and the angle of inclination of the first arm portion (46) cooperating with the cone angle of the external cone (26) and the angle of inclination of the end piece (48) being somewhat smaller than the angle (α) of the shoulder (12).

10. A push-in fitting according to Claim 9, characterized in that the punched-out cutting teeth (50) of the end pieces (48) project radially inwards in an extension of the intermediate piece (49), so that the internal diameter of the holding element (40) in the end region of the cutting teeth (50) is somewhat smaller than the external diameter of the conduit (14).

11. A push-in fitting according to one of Claims 1 to 10, characterized in that the holding element (40) is longitudinally divided by a longitudinal slit (59).

12. A push-in fitting according to one of Claims 1 to 11, characterized in that the actuating portion (43) comprises an annular portion bent radially outwards perpendicular to the longitudinal axis.

13. A push-in fitting according to one of Claims 2 to 12, characterized in that a hollow cylindrical sealing cap (51) is secured to the end of the second housing part (3), in particular by a latching connection, which encloses a chamber having the actuating portion (43) and has a sealing lip (55) for sealing with respect to the conduit (14).

14. A push-in fitting according to Claim 13, characterized in that an opening (56) is made in the sealing cap (51) for the purpose of pushing through an actuating tool.

15. A push-in fitting according to Claim 13 or 14, characterized in that an annular receiving chamber (57) is constructed outside the housing interior in the end region of the second housing part (3) surrounded by the sealing cap (51), for the purpose of receiving a profiled sealing ring (58) which is connected to the actuating portion (43).

16. A push-in fitting according to Claim 15, characterized in that the actuating portion (43) is connected to the profiled sealing ring (58) by vulcanization.

17. A push-in fitting according to Claim 15 or 16, characterized in that the profiled sealing ring (58) is guided longitudinally displaceably in the receiving chamber (57).

## Revendications

1. Raccord embrochable pour l'assemblage rapide et détachable de conduites tubulaires (14), réalisé en particulier en une matière synthétique, ce raccord comportant un boîtier de raccordement (1, 3) pour accueillir une extrémité de la conduite tubulaire (14), et un élément de maintien (40) disposé dans l'espace intérieur du boîtier, cet élément comprenant au moins un bord d'attaque entaillant l'extrémité de la conduite, et une section de cône extérieur (22) qui coopère avec une section de cône (26) du boîtier (1, 3) lors d'un mouvement de la conduite (14) dans la direction opposée à la direction d'embrochage (X) pour maintenir la conduite (14), ainsi qu'un joint périphérique (4 ; 58) pour rendre étanche la conduite (14) par rapport au boîtier de raccordement (1, 3), l'élément de maintien (40) pouvant coulisser dans l'espace intérieur du boîtier dans la direction d'embrochage (X) de la conduite (14), ainsi que dans la direction opposée, une portion de manoeuvre (43) de cet élément faisant saillie du boîtier de raccordement (1, 3), l'élément de maintien présentant en outre une section de cône inverse qui, pour écarter radialement le bord d'attaque, coopère avec une épaule conique (12) dans le sens contraire à la direction d'action de la section de cône (26) du boîtier (1, 3) lorsque l'élément de maintien (40) se déplace dans la direction d'embrochage,
caractérisé en ce que l'élément de maintien (40) a la forme d'un élément découpé et plié présentant une portion de maintien (42) qui comporte plusieurs bras élastiques (44) qui s'étendent dans la direction axiale, ces bras étant séparés entre eux par des fentes (45), et présentant des portions terminales (48) munies de dents de coupe (50) obtenues par estampage, les portions terminales (48) qui forment la portion de cône inverse coopérant avec l'épaule conique (10) pour l'écartement radial des dents de coupe (50), et les bras élastiques (44) coopérant avec la section conique (26) par des portions de bras (46) qui forment la section de cône extérieur (22), pour pousser les dents de coupe (50) radialement vers l'intérieur contre la conduite tubulaire (14).

2. Raccord embrochable selon la revendication 1,
caractérisé en ce que le boîtier de raccordement (1, 3) consiste en une première partie de boîtier (1), et une deuxième partie de boîtier (3) en forme de cylindre creux disposée coaxialement à la première partie, les faces frontales en regard des parties de boîtier (1, 3) étant reliées entre elles par matière, en particulier par soudage ou collage.

3. Raccord embrochable selon la revendication 1 ou 2,
caractérisé en ce qu'une ouverture de passage (2) avec un alésage passant (7) est prévue dans la première partie de boîtier (1), un joint périphérique (4), en particulier un joint torique, étant agencé en premier, vu dans la direction d'embrochage (X), dans une rainure périphérique intérieure (5).

4. Raccord embrochable selon l'une des revendications 1 à 3,
caractérisé en ce qu'un corps conique (9) annulaire est formé à l'intérieur de la première partie de boîtier (1), ce corps présentant un alésage (11) dont le diamètre correspond à l'alésage passant (7), et sur sa face en regard de la deuxième partie de boîtier (3), une épaule conique (12) dont le diamètre extérieur diminue continuellement dans la direction contraire à la direction d'embrochage (X), de manière à ce que sa face périphérique (13) s'étende suivant un angle aigu (α) par rapport à l'axe longitudinal (Y-Y) du raccord.

5. Raccord embrochable selon l'une des revendications 1 à 4,
caractérisé en ce que le corps conique (9) a la forme d'une bague séparée dont la face en regard de la première partie de boîtier (1) s'applique dans la région d'une portion de surface extérieure sur un redan annulaire (10) de l'alésage passant (7) de la première partie de boîtier (1).

6. Raccord embrochable selon l'une des revendications 1 à 4,
caractérisé en ce que le corps conique (9) est formé d'une pièce avec la première partie de boîtier (1).

7. Raccord embrochable selon l'une des revendications 1 à 5,
caractérisé en ce que la face du corps conique (9) en regard de la première partie de boîtier (1) forme une paroi de la rainure périphérique intérieure (5) qui accueille la bague d'étanchéité (4).

8. Raccord embrochable selon l'une des revendications 2 à 6,
caractérisé en ce que l'élément de maintien (40) comporte une portion d'enveloppe (41) guidée à l'intérieur de la deuxième partie de boîtier (3).

9. Raccord embrochable selon l'une des revendications 1 à 8,
caractérisé en ce que les portions (46) des bras élastiques (44) de la portion de maintien (42) s'étendent obliquement vers l'extérieur dans la direction radiale, et que les bras (44) comportent respectivement une portion pliée deux fois (47) faisant suite aux portions de bras (46), la deuxième portion (47) comportant une portion terminale (48) qui s'étend obliquement par rapport à l'axe longitudinal (Y-Y), et une portion intermédiaire (49) inclinée dans la direction opposée à la portion (48), l'angle d'inclinaison de la première portion (46) coopérant avec l'angle du cône extérieur (26), et l'angle d'inclinaison de la portion terminale (48) étant légèrement inférieur à l'angle (α) de l'épaule (12).

10. Raccord embrochable selon la revendication 9,
caractérisé en ce que les dents de coupe (50) dégagées par estampage des portions terminales (48) font radialement saillie vers l'intérieur en prolongeant la portion intermédiaire (49), le diamètre intérieur de l'élément de maintien (40) dans la portion terminale des dents de coupe (50) étant légèrement inférieur au diamètre extérieur de la conduite tubulaire (14).

11. Raccord embrochable selon l'une des revendications 1 à 10,
caractérisé en ce que l'élément de maintien (40) est séparé dans sa longueur par une fente longitudinale (59).

12. Raccord embrochable selon l'une des revendications 1 à 11,
caractérisé en ce que la portion de manoeuvre (43) consiste en une portion annulaire pliée radialement vers l'extérieur perpendiculairement à l'axe longitudinal.

13. Raccord embrochable selon l'une des revendications 1 à 12,
caractérisé par le fait qu'un capot d'étanchéité (51) en forme de cylindre creux est fixé sur l'extrémité de la deuxième partie de boîtier (3), en particulier par une liaison d'arrêt, ce capot comprenant une chambre qui présente la portion de manoeuvre (43), et une lèvre d'étanchéité (55) pour obtenir l'étanchéité par rapport à la conduite (14).

14. Raccord embrochable selon la revendication 13,
caractérisé en ce qu'un ajour (56) est prévu dans le capot d'étanchéité (51) pour faire passer un outil de manoeuvre.

15. Raccord embrochable selon la revendication 13 ou 14,
caractérisé en ce qu'à l'extérieur de l'espace intérieur du boîtier, dans la région terminale de la deuxième partie de boîtier (3) entourée par le capot d'étanchéité (51), on a formé une chambre d'accueil annulaire (57) pour recevoir une bague d'étanchéité profilée (58), cette bague étant reliée à la portion de manoeuvre (43).

16. Raccord embrochable selon la revendication 15,
caractérisé en ce que la portion de manoeuvre (43) est reliée à la bague d'étanchéité profilée (58) par vulcanisation.

17. Raccord embrochable selon la revendication 15 ou 16,
caractérisé en ce que la bague d'étanchéité profilée (58) peut coulisser longitudinalement dans la chambre d'accueil (57).
